# EUROPÄISCHE PATENTANMELDUNG

(11) **EP 1 465 121 A2**
(43) Veröffentlichungstag der Anmeldung: **06.10.2004**
(21) Anmeldenummer: 04450068.4
(22) Anmeldetag: 26.03.2004
(51) Int. Cl.: G07C 9/00

(54) **Vorrichtung zur Ausgabe optischer und/oder akustischer Informationen**

(30) Priorität: 28.03.2003 AT 4902003
(71) Anmelder: Movel Multimedia GmbH, 5400 Hallein (AT)
(72) Erfinder: Kürbiss, Robert, 5020 Salzburg (AT)
(74) Vertreter: Hübscher, Helmut, Dipl.-Ing.

(57) **Zusammenfassung**

Es wird eine Vorrichtung (1) zur Ausgabe optischer und/oder akustischer Informationen mit einer an eine Steuereinrichtung (2) angeschlossenen Ausgabeeinrichtung (3) für Bild und/oder Ton, mit einer mit der Steuereinrichtung (2) verbundenen Schnittstelle (6) zum Eingeben von Bild- und/oder Tonsignalen (7), mit einer einerseits mit einer Datenbank (9) für vorgegebene Einflußgrößen auf die Bild- und/oder Tondarstellung und andererseits an wenigstens einen Sensor (10) zum Empfangen solcher äußerer Einflußgrößen verbundenen Auswerteschaltung (8), die in Abhängigkeit vom Vergleich der über den Sensor (10) aufgenommenen Einflußgrößen mit den in der Datenbank (9) vorgegebenen Einflußgrößen einen Programmspeicher (14) zur Beaufschlagung der Steuereinrichtung ausliest, gezeigt. Um vorteilhafte Eigenschaften zu schaffen, wird vorgeschlagen, daß die Steuereinrichtung (2) eine über das ausgelesene Programm (13) des Programmspeichers (14) steuerbare Bearbeitungseinheit (15) für das über die Schnittstelle (6) eingegebene Bildund/oder Tonsignal (7) aufweist.

## Beschreibung

Die Erfindung bezieht sich auf eine Vorrichtung zur Ausgabe optischer und/oder akustischer Informationen mit einer an eine Steuereinrichtung angeschlossenen Ausgabeeinrichtung für Bild und/oder Ton, mit einer mit der Steuereinrichtung verbundenen Schnittstelle zum Eingeben von Bild- und/oder Tonsignalen, mit einer einerseits mit einer Datenbank für vorgegebene Einflußgrößen auf die Bild- und/oder Tondarstellung und andererseits an wenigstens einen Sensor zum Empfangen solcher äußerer Einflußgrößen verbundenen Auswerteschaltung, die in Abhängigkeit vom Vergleich der über den Sensor aufgenommenen Einflußgrößen mit den in der Datenbank vorgegebenen Einflußgrößen einen Programmspeicher zur Beaufschlagung der Steuereinrichtung ausliest.

Um die Bild- und/oder Tonsignale für eine Vorrichtung zur Ausgabe von optischen und/oder akustischen Informationen an einen davon angesprochenen Benutzer anzupassen, beispielsweise nach seinen Interessen abzustellen, ist es bekannt (EP 0 601 064 B1), einem Benutzer über empfangene äußere Einflußgrößen ein Benutzerprofil zuzuordnen. Hierzu besitzt die Vorrichtung eine Auswerteschaltung, die einerseits mit einer Datenbank für vorgegebene Einflußgrößen auf die Bild- und/oder Tondarstellung und andererseits mit wenigstens einem Sensor zum Empfangen solcher äußerer Einflußgrößen verbundenen ist. Die Auswerteschaltung vergleicht nun diese über den Sensor aufgenommenen Einflußgrößen mit den in der Datenbank vorgegebenen Einflußgrößen und ordnet in Abhängigkeit des Vergleichs einem Benutzer ein Benutzerprofil zu, wonach aus den in einem Programmspeicher abgelegten Bild- und/oder Tonsignalen eine Auswahl getroffen wird. Zwar kann damit verhindert werden, daß einem Benutzer Informationen ausgegeben werden, die seinem Benutzerprofil nicht entsprechen, jedoch wird dem jeweiligen Benutzer vergleichsweise häufig ein falsches Benutzerprofil zugeordnet. Weil eben die von den Sensoren empfangenen äußeren Einflußgrößen keinen Aufschluß darüber geben, ob diese Einflußgrößen von der Art und Weise der Ausgabe der Information oder von der Information selbst bestimmt werden. Hinzu kommt, daß gerade auf Bild- und/oder Tondarstellungen die Benutzer in unterschiedlichem Maße reagieren, so daß derartige Vorrichtungen nicht geeignet sind, sich schnell auf das Profil eines davon angesprochenen Benutzers einzustellen.

Der Erfindung liegt somit die Aufgabe zugrunde, eine Vorrichtung zur Ausgabe optischer und/oder akustischer Informationen so zu verbessern, daß sich die Vorrichtung vergleichsweise schnell auf ein Benutzerprofil eines von der Vorrichtung angesprochenen Benutzers einstellt.

Die Erfindung löst die gestellte Aufgabe dadurch, daß die Steuereinrichtung eine über das ausgelesene Programm des Programmspeichers steuerbare Bearbeitungseinheit für das über die Schnittstelle eingegebene Bild- und/oder Tonsignal aufweist.

Besitzt die Steuereinrichtung eine Bearbeitungseinheit, die von einem aus einem Programmspeicher ausgelesenen Programm steuerbar ist, so kann damit das über die Schnittstelle eingegebene Bild- und/oder Tonsignal entsprechend dem Programm bearbeitet werden, bevor das Bild- und/oder Tonsignal der Ausgabeeinrichtung zugeführt wird. Die Vorrichtung beeinflußt daher unter Einbeziehung der von einem jeweiligen Benutzer empfangenen Einflußgrößen die Bild- und/oder Tondarstellung und versucht nicht wie im Stand der Technik lediglich aus verschiedenen und in einem Programmspeicher abgelegten Bild- und/oder Tonsignalen auszuwählen. Einem Benutzer kann daher auch vergleichsweise schnell die optische und/oder akustische Information in seiner gewohnten Weise ausgegeben werden, wobei sich dadurch auch die Möglichkeit eröffnet, zu unterscheiden, ob die äußeren Einflußgrößen von der Art und Weise der Ausgabe einer Information oder von der Information selbst bestimmt werden.

Ist für die äußeren Einflußgrößen der Sensoren ein Speicher vorgesehen, der mit einer programmgesteuerten Speichereinheit für die Datenbank der vorgegebenen Einflußgrößen verbunden ist, so können äußere Einflußgrößen in die Datenbank mit vorgegebenen Einflußgrößen übernommen werden, wodurch neue Reaktionen eines Benutzers abgespeichert werden können.

Mit dem Vorsehen einer Schnittstelle zum Verändern der in der Datenbank vorgegebenen Einflußgrößen besteht auch die Möglichkeit, Veränderungen an den vorgegebenen Einflußgrößen vorzunehmen. Dies ist insbesondere dann von Vorteil, wenn bereits ein Benutzer durch die Vorrichtung erkannt wurde, so daß bereits vorhandene und für den Benutzer spezifische Einflußgrößen in die Datenbank über die Schnittstelle aufgenommen werden können.

Weiters kann die Auswerteschaltung von einer Überprüfungseinrichtung beaufschlagt werden, mit der zunächst die neuen äußeren Einflußgrößen mit den im Speicher für die äußeren Einflußgrößen abgelegten Einflußgrößen verglichen werden, bevor dann diese neuen äußeren Einflußgrößen der Auswerteschaltung für die Weiterverarbeitung übergeben werden. Dies ist insbesondere dann von Vorteil, wenn vergleichsweise hohe Unterschiede zwischen den neuen äußeren Einflußgrößen und den bereits im Speicher abgelegten äußeren Einflußgrößen auftreten. Damit können womöglich falsche neue äußere Einflußgrößen, beispielsweise mit einem Vergleich des Mittelwerts der im Speicher abgelegten äußeren Einflußgrößen mit den neuen äußeren Einflußgrößen, erkannt und verworfen werden.

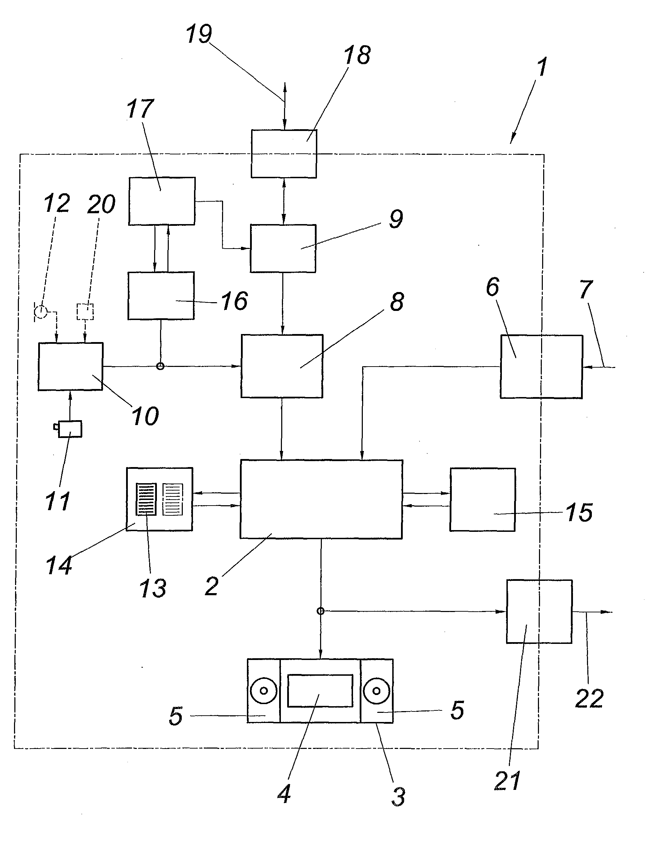

In der Zeichnung ist der Erfindungsgegenstand beispielsweise schematisch dargestellt.

Die dargestellte Vorrichtung 1 zur Ausgabe optischer und akustischer Informationen weist eine Steuereinrichtung 2, die an eine Ausgabeeinrichtung 3 für Bild und Ton angeschlossen ist. Hierfür weist die Ausgabeeinrichtung 3 einen Bildschirm 4 und Lautsprecher 5 auf. Die Steuereinrichtung 2 ist mit einer Schnittstelle 6 zum Eingeben von Bild- und Tonsignalen 7 und mit einer Auswerteschaltung 8 verbunden. Die Auswerteschaltung 8 wird einerseits von einer Datenbank 9 für vorgegebene Einflußgrößen auf die Bild- und Tondarstellung und andererseits von einem Sensor 10 beaufschlagt. Beispielsweise kann hierfür eine Kamera 11, ein Mikrofon 12 oder auch ein Sensor 10 zur Aufnahme von BIO-Daten 20 des Benutzers verwendet werden. In Abhängigkeit vom Vergleich der über den Sensor 10 aufgenommenen Einflußgrößen mit den in der Datenbank 9 abgespeicherten Einflußgrößen wird ein Programm 13 aus einem Programmspeicher 14 ausgelesen, das die Steuereinrichtung 2 beaufschlägt. Und zwar weist die Steuereinrichtung 2 eine Bearbeitungseinheit 15 auf, die von dem Programm 13 steuerbar ist. Das so über die Schnittstelle 6 eingegebene Bild- und Tonsignal 7 wird dann mit der Bearbeitungseinheit 15 bearbeitet und in weiterer Folge von der Steuereinrichtung 2 der Ausgabeeinrichtung 3 zugeführt. Weiters ist auch eine Schnittstelle 21 vorgesehen, mit der das bearbeitete Bild- und Tonsignal 22 parallel zur Ausgabeeinrichtung 3 der Vorrichtung entnommen werden kann.

Die äußeren Einflußgrößen sind weiters in einem überschreibbaren Speicher 16 abgelegt, aus dem eine programmgesteuerte Speichereinheit 17 Einflußgrößen in die Datenbank 9 mit den vorgegebenen Einflußgrößen übertragen kann. Beispielsweise kann so eine neue äußere Einflußgröße, die sich zeitlich zwischen zwei bereits in der Datenbank 9 mit den vorgegebenen Einflußgrößen ereignet, in die Datenbank 9 übernommen werden, wodurch die Vorrichtung 1 lernbar wird.

Die Vorrichtung 1 weist auch eine Schnittstelle 18 für die Datenbank 9 der vorgegebenen Einflußgrößen auf, damit diese beispielsweise mit in anderen Vorrichtungen vorhandenen Daten 19 ergänzt oder auch ausgelesen werden können, was mit einer bidirektionalen Verbindung zu der Datenbank 9 erreicht wird.

## Patentansprüche

1. Vorrichtung (1) zur Ausgabe optischer und/oder akustischer Informationen mit einer an eine Steuereinrichtung (2) angeschlossenen Ausgabeeinrichtung (3) für Bild und/oder Ton, mit einer mit der Steuereinrichtung (2) verbundenen Schnittstelle (6) zum Eingeben von Bild- und/oder Tonsignalen (7), mit einer einerseits mit einer Datenbank (9) für vorgegebene Einflußgrößen auf die Bild- und/oder Tondarstellung und andererseits an wenigstens einen Sensor (10) zum Empfangen solcher äußerer Einflußgrößen verbundenen Auswerteschaltung (8), die in Abhängigkeit vom Vergleich der über den Sensor (10) aufgenommenen Einflußgrößen mit den in der Datenbank (9) vorgegebenen Einflußgrößen einen Programmspeicher (14) zur Beaufschlagung der Steuereinrichtung ausliest, **dadurch gekennzeichnet, daß** die Steuereinrichtung (2) eine über das ausgelesene Programm (13) des Programmspeichers (14) steuerbare Bearbeitungseinheit (15) für das über die Schnittstelle (6) eingegebene Bild- und/oder Tonsignal (7) aufweist.

2. Vorrichtung nach Anspruch 1, **dadurch gekennzeichnet, daß** für die Einflußgrößen des zumindest einen Sensors (10) ein Speicher (16) vorgesehen ist, der mit einer programmgesteuerten Speichereinheit (17) für die Datenbank (9) der vorgegebenen Einflußgrößen verbunden ist.

3. Vorrichtung nach Anspruch 1 oder 2, **dadurch gekennzeichnet, daß** für die Datenbank (9) der abgespeicherten Einflußgrößen eine Schnittstelle (18) zum Verändern der vorgegebenen Einflußgrößen vorgesehen ist.
